# EUROPÄISCHE PATENTSCHRIFT

(11) **EP 0 394 535 B1**
(45) Veröffentlichungstag und Bekanntmachung des Hinweises auf die Patenterteilung: **24.03.1993**
(21) Anmeldenummer: 89107731.5
(22) Anmeldetag: 28.04.1989
(51) Int. Cl.: B64F 1/22

(54) **Flugzeug-Schlepper ohne Schleppstange (Schwenkteleskop)**
Aircraft tractor without a tow bar (telescopic strut)
Remorqueur d'avion sans barre de remorquage (barre télescopique)

(43) Veröffentlichungstag der Anmeldung: 31.10.1990
(73) Patentinhaber: MAN Gutehoffnungshütte Aktiengesellschaft, 46122 Oberhausen (DE)
(72) Erfinder: Franken, Wilhelm, Dipl.-Ing., D-4230 Wesel (DE); Michaelsen, Lars Torsten, Dipl.-Ing., D-5810 Herdecke (DE); Pohé, Dieter, Dipl.-Ing., D-4650 Gelsenkirchen (DE)
(74) Vertreter: Wolff, Michael, Dipl.-Phys.

(56) Entgegenhaltungen:
- EP-A- 0 276 779
- DE-A- 3 616 807

## Beschreibung

Die Erfindung betrifft einen Flugzeug-Schlepper ohne Schleppstange, gemaß Oberbegriff des Anspruches 1 oder 2.

Bei einem aus der DE-A/C-36 16 807 (Schopf/MAN) bekannten Schlepper dieser Art sind die unbeweglichen Teile der zwei Teleskopstangen starr am Fahrgestell-Vorderteil befestigt. Dabei sind die je unterhalb der zugeordneten Teleskopstange liegenden Zylinder der ersten Aggregate endseitig an den festliegenden Teilen der Teleskopstangen befestigt. Die Zylinder der dritten Aggregate sind dementsprechend am Fahrgestell-Vorderteil waagrecht befestigt.

Nachteilig an dieser Anordnung der ersten und dritten Aggregate, (zu denen zweite Zylinder-Kolben-Aggregate zum Knicken und Strecken des Fahrgestells hinzukommen,) welche die Zugarme zum Hintergreifen der Räder bzw. die Haltearme zur Ausübung eines Gegendruckes auf die Bugräder in Längsrichtung des Schleppers vor- und zurückbewegen, ist der Umstand, daß diese als Rollenböcke ausgebildeten vier Arme stets in konstanter Höhe über der Unterstützungsfläche der starr mit dem Fahrgestell-Vorderteil verbundenen Hubschaufel liegen und also bei kleinerem Bugraddurchmesser paarweise einander näher sind und das zugeordnete Bugrad näher bei seinem oberen Scheitelpunkt berühren, als dies bei einem größeren Bugraddurchmesser der Fall wäre, der sein Maximum erreicht hat, wenn die Zugarme einerseits und die Haltearme andererseits einander bezüglich eines ungefähr waaagrechten Raddurchmessers diametral gegenüberliegen. Bei einem noch größeren Raddurchmesser kämen die Greif- und die Haltearme an den unteren Radhälften zur Anlage, so daß sie bezüglich der Unterstützungsfläche der Hubschaufel nicht mehr als Niederhalter der Bugräder wirken könnten. - Demnach bestimmt bei dem bekannten Schlepper der Bugraddurchmesser den Grad der Sicherheit, mit welcher das auf der Hubschaufel stehende Bugfahrwerk des zu schleppenden Flugzeuges auf der Unterstützungsfläche niedergehalten wird.

Der Erfindung liegt daher die Aufgabe zugrunde, einen Schlepper zu schaffen, bei dem der zuvor genannte Sicherheitsgrad bei verschiedenen Bugraddurchmessern gleichbleibend gehalten werden kann.

Diese Aufgabe ist bei einem Schlepper der eingangs genannten Art erfindungsgemäß durch die kennzeichnenden Merkmale des Anspruches 1 bzw. 2 gelöst, wobei die Brücke zusätzlich einen gleichmäßigen Angriff der Kolbenstangen jeder dritten Aggregate an dem Halter oder an zwei Haltern je eines Bugrades zum Abstoßen des Schleppers vom Bugfahrwerk und außerdem eine nachgiebige Lagerung jedes Halters ermöglicht, wie sie für Kurvenfahrten des Schleppers mit einem schrägstehenden Bugfahrwerk zweckmäßig ist.
In der Hauptsache wird vorteilhafterweise erreicht, daß die beiden Zugarme und der oder die Halter (Haltearme) gleichzeitig in die gewünschte Höhenlage über der Unterstützungsfläche der Hubschaufel gebracht werden können, in welcher die unterstützten Bugräder sicher von den Armen erfaßt und auf die Hubschaufel niedergehalten werden. Es kann nun jedes Bugrad unabhängig von seinem Durchmesser an den gewünschten zwei Stellen der oberen Hälfte seines Umfangs angegriffen und mittels der Koppeln zwischen den Teleskopstangen einerseits und dem Fahrgestell-Vorderteil andererseits festgehalten werden.

Dieser Vorteil wird schon bei einem aus der EP-A-0 276 779 (Heck) bekannten Schleppfahrzeug (Figur 3) der im Oberbegriff des Anspruches 2 genannten Art zum Manövrieren von Flugzeugen ohne Schleppstange, mit teleskopstangenunabhängiger Hubschaufel (Spalte 9, Zeilen 33-35) dadurch erreicht, daß jede ein erstes Aggregat (20) lagernde Teleskopstange (13) um die Fahrzeuglängsachse (79) senkrecht kreuzende, parallele Achsen (11 bzw.-) am Fahrgestell (5) vorn direkt und hinten mittels eines fünften Zylinder-Kolben-Aggregates (37) als Koppel angelenkt ist, deren Verlängerung den am hinteren Ende der Teleskopstange (13) angelenkten Zugarm (53) anhebt; und daß jeder Zylinder eines dritten Aggregats (31) -nicht starr, sondern beweglich (Schwenkachse 29)- mit dem in seiner Längsrichtung unbeweglichen Teil (19a) einer der zwei Teleskopstangen (13) verbunden ist, so daß jedes dritte Aggregat (31) mit der zugeordneten Teleskopstange (13) um deren vordere Anlenkachse (11) schwenkbar ist. Die dritten Aggregate (31) greifen -mittels Kolbenstangen (32)- aber nicht an einer beide Teleskopstangen verbindenden Brücke, sondern je an einem, einen von zwei Haltern (43) lagernden Gleitschuh (34) an, der in einer Führungsschiene (33) verschiebbar ist, die fest mit dem in seiner Längsrichtung unbeweglichen Teil (19a) der zugeordneten Teleskopstange (13) verbunden sein muß.

Im folgenden ist die Erfindung anhand der durch die Zeichnung beispielhaft dargestellten bevorzugten Ausführungsform des erfindungsgemäßen Schleppers im einzelnen erläutert. Es zeigt:
- Fig. 1: eine Draufsicht auf die Ausführungsform mit Zugarmen in Längslage
- Fig. 2: eine abgebrochen dargestellte Draufsicht auf die Ausführungsform mit Zugarmen in Querlage
- Fig. 3: einen zentralen vertikalen Längsschnitt nach der Linie III-III in Fig 2 durch die Ausführungsform

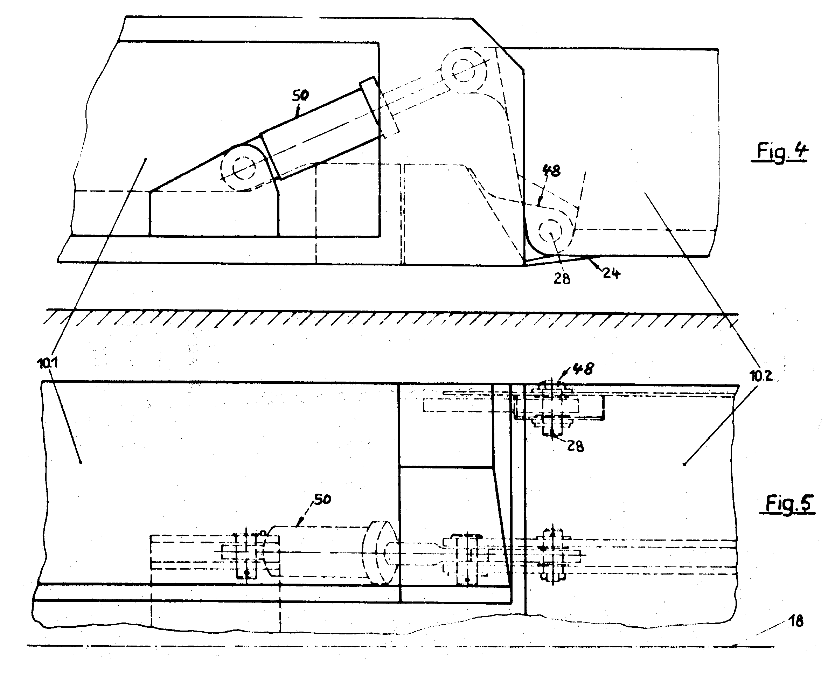

- Fig. 4u.5: eine Seitenansicht bzw Draufsicht der Knickstelle des Fahrgestells
- Fig. 6: eine aufgebrochene Seitenansicht einer Teleskopstange

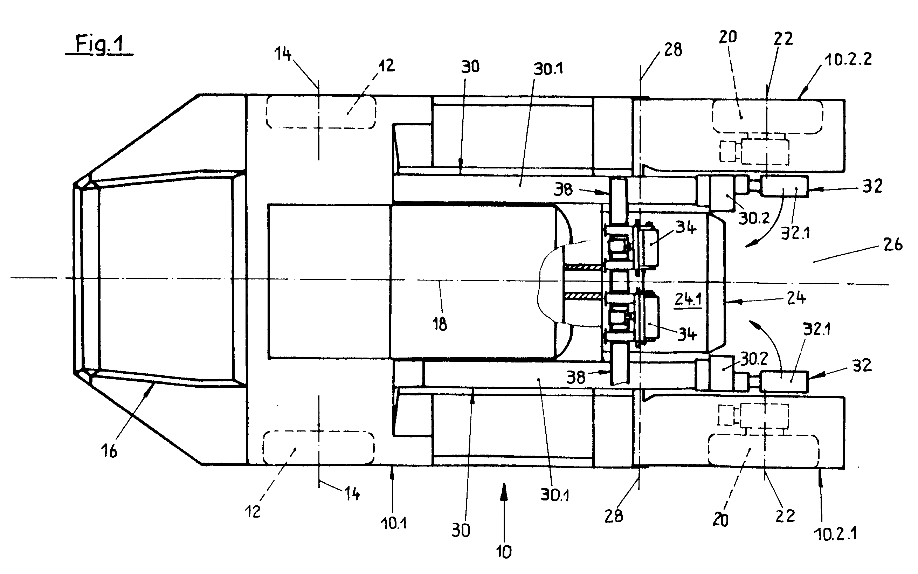

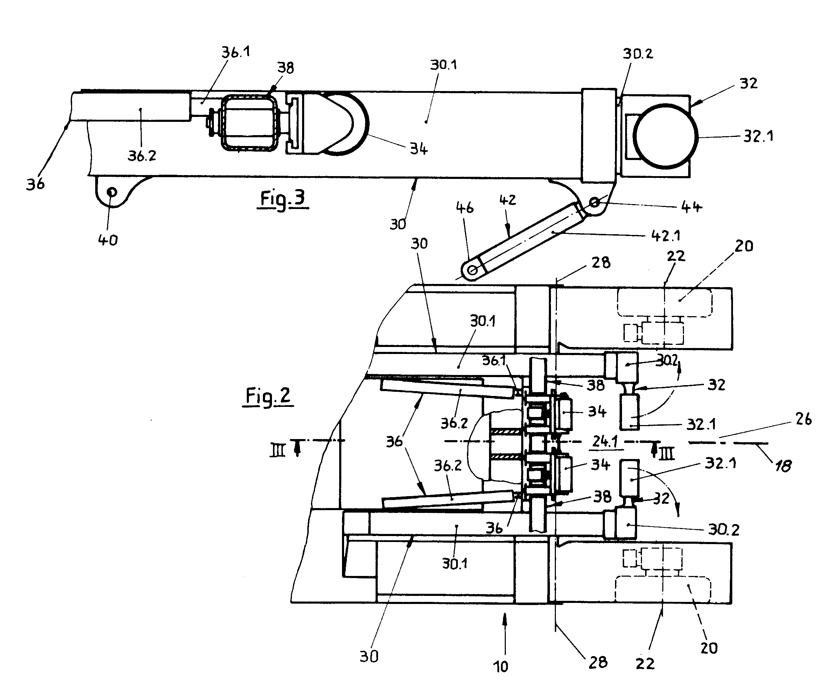

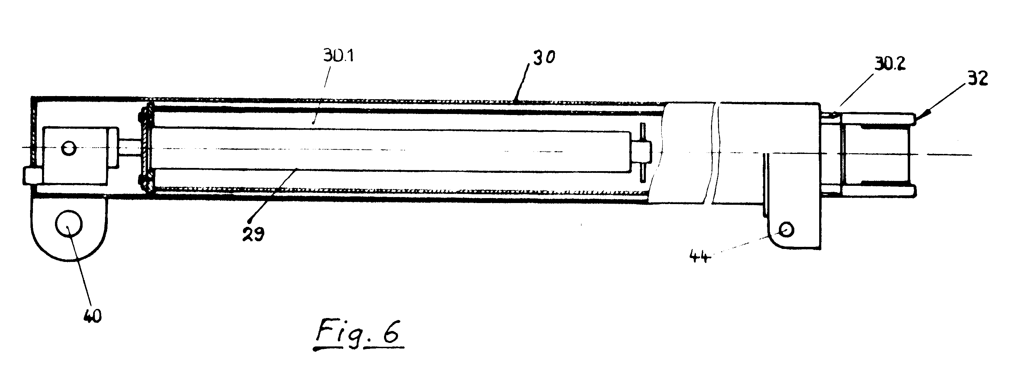

Im Ausführungsbeispiel weist der erfindungsgemäße Schlepper ein im großen und ganzen zweiteiliges Fahrgestell (10) auf, an dessen größerem,einheitlichem Vorderteil (10.1) zwei angetriebene, lenkbare Vorderräder (12) mit waagrechten Drehachsen (14) gelagert sind und vor diesen Vorderachsen eine Kabine (16) für den Schlepperfahrer aufsitzt. - Der Hinterteil (10.2) des Fahrgestells besteht aus einer linken Hälfte (10.2.1) und einer rechten Hälfte (10.2.2), welche bezüglich einer die zentrale waagrechte Längsachse (18) des Schleppers enthaltenden vertikalen Symetrieebene, die senkrecht auf einer eben gedachten Fahrbahn des Schleppers steht, spiegelbildlich,aber sonst gleich ausgestaltet sind. Jede Hälfte des Fahrgestell-Hinterteiles (10.2) weist ein antreibbares Hinterrad (20) auf, das mit dem gegenüberliegenden zweiten Hinterrad um dieselbe gedachte waagrechte Querachse (22) läuft, die auf der die Längsachse (18) enthaltenden vertikalen Symmetrieebene senkrecht steht und durch zwei nicht gezeigte Hinterradachsstummel verkörpert ist.
An seinem hinteren Ende weist der Fahrgestell-Vorderteil (10.1) eine plattformähnliche Hubschaufel (24) auf, die bei Drehung des Fahrgestell-Vorderteiles (10.1) um die bei geradeaus gestellten Vorderrädern (12) fluchtenden Drehachsen (14) derselben die Fahrbahn fast berührt, aber von dieser getrennt ist, wenn die Bugräder des Fahrwerkes des zu schleppenden Flugzeuges auf die Hubschaufel (24) rollen. Dazu besitzt die symmetrische Hubschaufel (24) eine geneigte Unterstützungsfläche (24.1) mit Gefälle nach hinten, welche bei gestrecktem Fahrgestell (10) waagrecht liegt und das Bugfahrwerk aufnimmt. Dazu begrenzen die beiden Hälften (10.2.1 bzw. 10.2.2 ) des Fahrgestell-Hinterteiles eine nach hinten sowie oben und unten offene Ausnehmung (26) dieses Hinterteiles seitlich.
Der Vorderteil (10.1) und der Hinterteil (10.2) des Fahrgestells sind so gelenkig miteinander verbunden, daß das Fahrgestell (10) zum Absenken der Hubschaufel (24)gegen die Fahrbahn geknickt und zum Anhub des darauf stehenden Bugfahrwerkes gestreckt werden kann. Die waagrechte Knickachse (28) kreuzt die Schlepper-Längsachse (18) senkrecht, liegt ungefähr in Höhe der Hubschaufel-Unterstützungsfläche (24.1) und ist am vorderen Ende der Hubschaufel (24) angeordnet.
Zwischen der Hubschaufel (24) einerseits und den beiden Hälften des Fahrgestell-Hinterteiles (10.2) andererseits liegt je eine mit einem in Fig. 6 gezeigten ersten Zylinder-Kolben-Aggregat (29) zur Längenverstellung versehene Teleskopstange (30), deren festliegender, d.h. hier nicht verschiebbarer Teil (30.1), den zugeordneten beweglichen Teil (30.2) axial führt, an dessen hinterem freiem Ende ein Rad des Bugfahrwerkes hintergreifender Zugarm (32) angelenkt ist, der um eine die Stangenachse senkrecht schneidende,ungefähr vertikale Achse zwischen einer in Fig.1 gezeigten Längslage parallel zur benachbarten Hälfte des Fahrgestell-Hinterteiles (10.2) und einer in Fig.2 gezeigten Querlage senkrecht dazu in den Pfeilrichtungen schwenkbar ist. In ihren Längslagen sind die zwei Zugarme (32) bereit zur Aufnahme des Bugfahrwerkes in die Fahrgestell-Ausnehmung (26).
Am vorderen Ende der Fahrgestell-Ausnehmung (26) befinden sich zwei gleiche, symmetrisch angeordnete Bugrad-Halter (34), die mittels zweier spiegelbildlich angeordeter dritter Zylinder-Kolben-Aggregate (36) gleichzeitig nach hinten bewegt werden können, um das Bugfahrwerk aus der Ausnehmung hinaus zu drücken, wenn das Flugzeug in die gewünschte Position geschleppt ist. Dazu sind die zwei Halter (34) mittelbar an einer Brücke (38) gelagert, welche das vordere Ende der Fahrgestell-Ausnehmung (26) senkrecht zur Fahrgestell-Längsachse (18) oberhalb der Hubschaufel (24) überquert und ihrerseits mit ihren zwei freien Enden derart an den beiden festliegenden Teleskopstangen-Teilen (30.1) gelagert ist, daß eine Relativverschiebung der Brücke (38) von vorn nach hinten und umgekehrt mittels der beiden synchron arbeitenden Aggregate (36) möglich ist, deren Kolbenstangen (36.1) mit der Brücke verbunden sind und deren Zylinder (36.2) je starr mit dem zugeordneten festliegenden Teil (30.1) einer der beiden Teleskopstangen verbunden sind,an denen die nicht gezeigten ersten Aggregate zur Längenverstellung derart angeordnet sind, daß die beiden ersten Aggregate stets mit den beiden Teleskopstangen (30) verlagert werden. Jede der beiden Teleskopstangen (30) ist am Fahrgestell-Vorderteil (10.1) vorn dank eines Gelenkes (40) direkt und hinten mittels eines fünften Zylinder-Kolben-Aggregates (42) indirekt angelenkt, dessen Zylinder (42.1) über ein anderes Gelenk (44) mit dem hinteren Ende des festliegenden Teleskopstangen-Teiles (30.1) verbunden ist, und dessen Kolbenstange (42.2) über ein weiteres Gelenk (46) mit dem Fahrgestell-Vorderteil (10.1) verbunden ist. Dabei ist die Anordnung der zwei Aggregate (42) in parallelen vertikalen Ebenen,zwischen denen die Schlepper-Längsachse (18)als Mittellinie verläuft, so getroffen, daß die zwei Gelenke (46) tiefer und vor den zwei Gelenken (44) liegen, so daß eine Verkürzung oder Verlängerung der beiden Aggregate (42) zu einem Herab- bzw. Hinaufschwenken der beiden Teleskopstangen (30) zusammen mit den beiden Zugarmen (32) führt, so daß letztere in ihren Querlagen stets unabhängig vom Durchmesser der Bugräder in einer Ausgangshöhe angeordnet werden können, in welcher für einen durch Verkürzung der beiden Teleskopstangen (30) verursachten Angriff der beiden querliegenden Zugarme (32) an den Bugrädern von oben und hinten her gesorgt ist. Der Angriffspunkt am Reifenumfang kann also stets im oberen hinteren Umfangsviertel gewählt werden. - Damit die bei der Verkürzung der beiden Teleskopstangen (30) aufgetretene Relativbewegung jedes querliegenden Zugarmes (32) bezüglich des Reifenumfanges auf eine Rollreibung vermindert ist, weist jeder Zugarm (32) eine am zugeordneten Bugrad abrollende Hohlwalze (32.1) auf, die dieses Rad hintergreift.

Da die beiden Halter (34) über die sie lagernde Brücke (38) mit den Teleskopstangen (30) verbunden sind, werden bei deren Verschwenkung auch die Halter abgesenkt bzw. angehoben; allerdings in geringerem Maße als die Zugarme (32). D.h., daß auch der Punkt der gegenseitigen Berührung von Halter und Bugrad wählbar ist und und in das obere vordere Radumfangsviertel fallen soll. Dementsprechend weisen die Halter (34) ebenfalls eine am Bugrad abrollende, drehbare kreiszylindrische Umfangsfläche auf.

Der Vorderteil (10.1) und der Hinterteil (10.2) des Fahrgestells sind dadurch gelenkig miteinander verbunden, daß einerseits die linke Hälfte (10.2.1) und andererseits die rechte Hälfte (10.2.2) des Fahrgestell-Hinterteils je ein Drehgelenk (48) bilden, deren Zapfen fluchten und die Knickachse (28) definieren.

Zum Knicken und Strecken des Fahrgestells (10) unter Absenkung bzw. Anhebung der Knickachse (28) ist ein Paar zweiter hydraulischer Zylinder-Kolben-Aggregate (50) vorgesehen, die sich auf beiden Seiten des Fahrgestell-Vorderteils (10.1) erstrecken und vorn an diesem sowie hinten am Fahrgestell-Hinterteil (10.2) angelenkt sind, so daß die oben liegenden zweiten Aggregate (50) dort ungefähr über der Knickachse (28) angreifen.

## Patentansprüche

1. Flugzeug-Schlepper ohne Schleppstange, mit einem geteilten Fahrgestell (10), dessen Vorderradachsen (14) an einem Vorderteil (10.1) und dessen Hinterradachs (22) stummel an einem, durch eine Ausnehmung (26) zur Aufnahme des Flugzeug-Bugfahrwerks gegabelten, Hinterteil (10.2) gelagert sind, welches mittels einer einzigen, hinterradachsparallelen Knickachse (28) gelenkig mit dem getrennten Vorderteil (10.1) verbunden ist, an dem hinter der Knirkachse (28) am vorderen Ende der Fahrgestell-Ausnehmung (26) eine Hubschaufel (24) angeordnet ist, die eine Unterstützungsfläche (24.1) für den Hub des aufgenommenen Bugfahrwerks aufweist, welche bei geknicktem Fahrgestell (10) nach hinten sowie unten abfällt und bei gestrecktem Fahrgestell waagrecht liegt; mit zwei spiegelbildlichen Zugarmen (32), die am hinteren Ende der Fahrgestell-Ausnehmung (26) angeordnet und sowohl aus einer Quertage (Fig.2) zum Hintergreifen je eines Bugrades in eine Längslage (Fig.1) vor dessen Aufnahme in die Ausnehmung (26) als auch nach vorn bewegbar sind mittels je einer Teleskopstange (30), die zum Verstellen ihrer Länge mit einem ersten hydraulischen Zylinder-Kolben-Aggregat (29) versehen ist; und mit mindestens einem Bugrad-Halter (34), der am vorderen Ende der Fahrgestell-Ausnehmung (26) oberhalb der Hubschaufel (24) angeordnet und nach hinten bewegbar ist mittels eines dritten Zylinder-Kolben-Aggregats (36), dadurch **gekennzeichnet,** daß jede ein erstes Aggregat (29) lagernde Teleskopstange (30) um zur Knickachse (28) parallele Achsen (40 bzw. 46) am Fahrgestell-Vorderteil (10.1) vorn direkt und hinten mittels eines fünften Zylinder-Kolben-Aggregats (42) als Koppel angelenkt ist, deren Verlängerung den am hinteren Ende der Teleskopstange (30) angelenkten Zugarm (32) anhebt; und daß jeder Zylinder (36.2) eines dritten Aggregats (36) starr mit dem in seiner Längsrichtung unbeweglichen Teil (30.1) einer der zwei Teleskopstangen (30) verbunden ist, so daß jedes dritte Aggregat (36) mit der zugeordneten Teleskopstange (30) um deren vordere Anlenkachse (40) schwenkbar ist; wobei die dritten Aggregate (36) an den Enden einer die Fahrgestell-Ausnehmung (26) querenden, den Bugrad-Halter (34) mittelbar lagernden Brücke (38) angreifen, deren Enden an den in ihren parallelen Längsrichtungen unbeweglichen Teilen (30.1) der beiden Teleskopstangen (30) verschiebbar gelagert sind.

2. Flugzeug-Schlepper ohne Schleppstange, mit einem Fahrgestell (10), dessen Hinterteil (10.2) durch eine Ausnehmung (26) zur Aufnahme des Flugzeug-Bugfahrwerks gegabelt ist, an deren vorderem Ende eine Hubschaufel (24) am Fahrgestell-Vorderteil (10.1) angeordnet ist, die eine Unterstützungsfläche (24.1) für den Hub des aufgenommenen Bugfahrwerks aufweist, welcher mittels einer Hubvorrichtung (48, 50) ausführbar ist; mit zwei spiegelbildlichen Zugarmen (32), die am hinteren Ende der Fahrgestell-Ausnehmung (26) angeordnet und sowohl aus einer Querlage (Fig. 2) zum Hintergreifen je eines Bugrades in eine Längslage (Fig. 1) vor dessen Aufnahme in die Ausnehmung (26) als auch nach vorn bewegbar sind mittels je einer Teleskopstange (30), die zum Verstellen ihrer Länge mit einem ersten hydraulischen Zylinder-Kolben-Aggregat (29) versehen ist; und mit mindestens einem Bugrad-Halter (34), der am vorderen Ende der Fahrgestell-Ausnehmung (26) oberhalb der Hubschaufel (24) angeordnet und nach hinten bewegbar ist mittels eines dritten Zylinder-Kolben-Aggregats (36), dadurch **gekennzeichnet,** daß jede ein erstes Aggregat (29) lagernde Teleskopstange (30) um die Fahrzeug-Längsachse (18) senkrecht kreuzende, parallele Achsen (40 bzw. 46) am Fahrgestell-Vorderteil (10.1) vorn direkt und hinten mittels eines fünften Zylinder-Kolben-Aggregats (42) als Koppel angelenkt ist, deren Verlängerung den am hinteren Ende der Teleskopstange (30) angelenkten Zugarm (32) anhebt; und daß jeder Zylinder (36.2) eines dritten Aggregats (36) starr mit dem in seiner Längsrichtung unbeweglichen Teil (30.1) einer der zwei Teleskopstangen (30) verbunden ist, so daß jedes dritte Aggregat (36) mit der zugeordneten Teleskopstange (30) um deren vordere Anlenkachse (40) schwenkbar ist; wobei die dritten Aggregate (36) an den Enden einer die Fahrgestell-Ausnehmung (26) querenden, den Bugrad-Halter (34) mittelbar lagernden Brücke (38) angreifen, deren Enden an den in ihren parallelen Längsrichtungen unbeweglichen Teilen (30.1) der beiden Teleskopstangen (30) verschiebbar gelagert sind.

## Claims

1. Aircraft tug Without a drag link, comprising: a divided chassis (10), the front wheel axles (14) of which are borne at a front part (10.1) and the rear wheel axle (22) stubs of which are borne at a rear part (10.2), which is bifurcated by a recess (26) for the reception of the aircraft nosewheel assembly and which is pivotably connected with the separate front part (10.1) by means of a single knee axle (28) parallel to the rear wheel axle, at which front part there is arranged, behind the knee axle (28) and at the front end of the chassis recess (26), a lifting blade (24), which has a support surface (24.1) for the lifting of the received nosewheel assembly, which surface slopes rearwardly and downwardly when the chassis frame (10) is kinked and lies horizontally when the chassis is straight; two mirror-image traction arms (32) which are arranged at the rear end of the chassis recess (26) and which are each movable by means of a respective telescopic rod (30), which is provided with a first hydraulic piston-cylinder unit (29) for the adjustment of the length thereof, not only out of a transverse position (Fig. 2) for engagement behind each nose wheel and into a longitudinal position (Fig. 1) before the reception thereof in the recess (26), but also forwardly; and at least one nosewheel holder (34) which is arranged at the front end of the chassis recess (26) and above the lifting blade (24) and which is movable rearwardly by means of a third piston-cylinder unit (36); characterised thereby that each telescopic rod (30) bearing a first unit (29) is articulated to the chassis front part (10.1) about axes (40 and 46) parallel to the knee axle (28), at the front directly and at the rear by means of a fifth piston-cylinder unit (42) as coupler, the extension of which raises the traction arm (32) at the rear end of the telescopic rod (30), and that each cylinder (36.2) of a third unit (36) is rigidly connected with the part (30.1), which is immovable in its longitudinal direction, of one of the two telescopic rods (30), so that each third unit (36) is pivotable together with the associated telescopic rod (30) about the front articulation axis (40) thereof, wherein the third unit (36) engages at the ends of a bridge (38), which crosses the chassis recess (26), mounts the nosewheel holder (34) indirectly and the ends of which are displaceably borne at the parts (30.1), which are immovable in their parallel longitudinal directions, of the two telescopic rods (30).

2. Aircraft tug without a drag link, comprising : a chassis (10), the rear part (10.2) of which is bifurcated by a recess (26) for the reception of the aircraft nosewheel assembly, at the front end of which recess is arranged, at the chassis front part (10.1), a lifting blade (24) having a support surface (24.1) for the lifting of the received nosewheel assembly, which can be effected by means of a lifting device (48, 50); two mirror-image traction arms (32) which are arranged at the rear end of the chassis recess (26) and which are each movable by means of a respective telescopic rod (30), which is provided with a first hydraulic piston-cylinder unit (29) for the adjustment of the length thereof, not only out of a transverse position (Fig. 2) for engagement behind each nose wheel and into a longitudinal position (Fig. 1) before the reception thereof in the recess (26), but also forwardly; and at least one nosewheel holder (34) which is arranged at the front end of the chassis recess (26) and above the lifting blade (24) and which is movable rearwardly by means of a third piston-cylinder unit (36); characterised thereby that each telescopic rod (30) bearing a first unit (29) is articulated to the chassis front part (10.1) about parallel axes (40 and 46) perpendicularly crossing the vehicle longitudinal axis (18), at the front directly and at the rear by means of a fifth piston-cylinder unit (42) as coupler, the extension of which raises the traction arm (32) at the rear end of the telescopic rod (30), and that each cylinder (36.2) of a third unit (36) is rigidly connected with the part (30.1), which is immovable in its longitudinal direction, of one of the two telescopic rods (30), so that each third unit (36) is pivotable together with the associated telescopic rod (30) about the front articulation axis (40) thereof, wherein the third unit (36) engages at the ends of a bridge (38), which crosses the chassis recess (26), mounts the nosewheel holder (34) indirectly and the ends of which are displaceably borne at the parts (30.1), which are immovable in their parallel longitudinal directions, of the two telescopic rods (30).

## Revendications

1. Remorqueur d'avion sans barre de remorquage, avec un châssis divisé (10) dont les essieux avant (14) sont montés sur une partie avant (10.1) et dont les fusées d'essieu des roues arrière (22) sont montées sur une partie arrière (10.2) en forme de fourche pour recevoir le train avant d'atterrissage de l'avion, partie arrière que est reliée au moyen d'un axe unique d'abaissement (28), s'étendant parallèlement à l'axe des roues arrière, à la partie antérieure (10.1) séparée, sur laquelle est disposée en arrière de l'axe d'abaissement (28) sur l'extrémité antérieure de l'évidement du châssis (26) une pelle de levage (24) qui présente une surface d'appui (24.1) pour le soulèvement du train avant d'atterrissage reçu, pelle qui, quand le châssis (10) est abaissé, tombe vers l'arrière et vers le bas et se trouve horizontale quand le châssis est allongé ; avec deux bras de traction symétriques (32) qui sont disposés à l'extrémité arrière de l'évidement (26) du châssis et qui peuvent être déplacés aussi bien à partir d'une position transversale (figure 2) pour agripper par derrière une roue avant de l'avion dans une position longitudinale (figure 1) avant de recevoir cette roue dans l'évidement (26) qu'être également déplacés vers l'avant au moyen d'un bras télescopique (30) qui est pourvu d'un ensemble cylindre-piston de vérin hydraulique (29) pour régler sa longueur ; et avec au moins une pièce opératrice de roue avant d'avion (34), qui est disposée à l'extrémité avant de l'évidement du châssis (26) au-dessus de la pelle de levage (24) et peut être déplacée vers l'arrière au moyen d'un troisième ensemble de cylindre piston de vérin (36), remorqueur d'avion caractérisé en ce que chaque barre télescopique (30) portant un premier ensemble de vérin (29) est articulée autour d'axes (40 ou 46) parallèles à l'axe d'abaissement (28) directement à l'avant sur la partie antérieure du châssis (10.1) et à l'arrière au moyen d'un cinquième ensemble (42) de cylindre-piston de vérin comme bielle, dont l'allongement soulève le bras de traction (32) articulé à l'extrémité arrière de la barre télescopique (30) et en ce que chaque cylindre (36.2) d'un troisième ensemble (36) est relié rigidement à la partie immobile (30.1) dans son sens longitudinal d'une des deux barres télescopiques (30) de telle sorte que chaque troisième ensemble (36) peut pivoter avec la barre télescopique (30) correspondant autour de son axe d'articulation antérieur, les troisièmes ensembles (36) venant en prise aux extrémités d'un pont (38) réunissant transversalement l'évidement du châssis (26) portant indirectement la pièce opératrice de la roue avant de l'avion (34), pont dont les extrémités sont montées de façon à pouvoir coulisser aux parties (30.1) des deux barres télescopiques (30) immobiles dans leurs sens longitudinaux parallèles.

2. Remorqueur d'avion sans barre de remorquage avec un châssis (10), dont la partie arrière (10.2) présente la forme d'une fourche avec un évidement (26) pour recevoir le train avant d'atterrissage de l'avion, châssis sur l'extrémité antérieure (10.1) duquel est disposée une pelle de levage (24), qui présente une surface d'appui (24.1) pour soulever le train d'atterrissage reçu, mouvement qui peut être réalisé au moyen d'un dispositif de soulèvement (48, 50) ; avec deux bras de traction symétriques (32) qui sont disposés à l'extrémité arrière de l'évidement du châssis (26) et qui peuvent être déplacés aussi bien à partir d'une position transversale (figure 2) pour agripper par derrière une roue avant de l'avion dans une position longitudinale (figure 1) avant de recevoir cette roue dans l'évidement (26) qu'être également déplacés vers l'avant au moyen d'un bras télescopique (30), qui est pourvu d'un ensemble cylindrepiston de vérin hydraulique (29) pour régler sa longueur ; et avec au moins une pièce opératrice de roue avant d'avion (34), qui est disposée à l'extrémité avant de l'évidement du châssis (26) au-dessus de la pelle de levage (24) et peut être déplacée vers l'arrière au moyen d'un troisième ensemble de cylindre piston de vérin (36), remorqueur d'avion caractérisé en ce que chaque barre télescopique (30) portant un premier ensemble de vérin (29) est articulée autour d'axes (40 ou 46) parallèles croisant perpendiculairement l'axe longitudinal du véhicule (18) directement à l'avant et à l'arrière du chassis antérieur (10.1) au moyen d'un cinquième ensemble de cylindre-piston de vérin (42) comme bielle, dont l'allongement soulève le bras de traction (32) articulé et l'extrémité arrière de la barre télescopique (30) et en ce que chaque cylindre (36.2) d'un troisième ensemble (36) est relié rigidement à la partie immobile (30.1) dans son sens longitudinal de l'une des deux barres télescopiques (30), de telle sorte que chaque troisième ensemble (36) peut pivoter avec la barre télescopique correspondante (30) autour de l'axe antérieur d'articulation (40), les troisièmes ensembles (36) venant en prise aux extrémités d'un pont reliant transversalement l'évidement du châssis (26) portant indirectement la pièce opératrice (34) de la roue avant de l'avion (9), pont dont les extrémités sont montées de façon à pouvoir coulisser aux parties immobiles (30.1) dans leurs sens longitudinaux parallèles des deux bras télescopiques (30).
